# EUROPEAN PATENT APPLICATION

(11) **EP 1 928 197 A2**
(43) Date of publication of application: **04.06.2008**
(21) Application number: 07014095.9
(22) Date of filing: 18.07.2007
(51) Int. Cl.: H04Q 7/38

(54) **Method and system for a shared antenna control using the output of a voice activity detector**

(30) Priority: 29.11.2006 US 867729 P; 11.06.2007 US 760865
(71) Applicant: Broadcom Corporation, Irvine, CA 92617 (US)
(72) Inventor: Desai, Prasanna, 92024 Olivenhain CA (US); Le Blanc, Wilfried, Vancouver B.C. (CA)
(74) Representative: Jehle, Volker Armin

(57) **Abstract**

Aspects of a method and system for a shared antenna control using the output of a voice activity detector are provided. A single radio chip for use within a wireless device may handle communication of a Bluetooth (BT) and a Wireless Local Area Network (WLAN) protocol via a single antenna. Simultaneous reception via BT and WLAN channels may be enabled. The single radio chip may enable detection of voice activity in the BT channel and may reduce the BT transmission priority level some time after the voice activity indicates that the BT channel is not transmitting voice information to enable error concealment. Voice activity detection may be based on PCM samples in the BT channel. The single radio chip may transmit an ACK signal to an access point after the BT transmission priority level is reduced.

## Description

### CROSS-REFERENCE TO RELATED APPLICATIONS/INCORPORATION BY REFERENCE

This patent application makes reference to, claims priority to and claims benefit from United States Provisional Patent Application Serial No. 60/867,729 filed on November 29, 2006.

The above stated application is hereby incorporated by reference in its entirety.

### FIELD OF THE INVENTION

Certain embodiments of the invention relate to wireless communications. More specifically, certain embodiments of the invention relate to a method and system for a shared antenna control using the output of a voice activity detector.

### BACKGROUND OF THE INVENTION

The use of Wireless Personal Area Networks (WPANs) has been gaining popularity in a great number of applications because of the flexibility and convenience in connectivity they provide. WPAN systems, such as those based on Class 2 Bluetooth (BT) technology, generally replace cumbersome cabling and/or wiring used to connect peripheral devices and/or mobile terminals by providing short distance wireless links that allow connectivity within a 10-meter range. Though, for a limited number of applications, higher-powered Class 1 BT devices may operate within a 100-meter range. In contrast to WPAN systems, Wireless Local Area Networks (WLANs) provide connectivity to devices that are located within a slightly larger geographical area, such as the area covered by a building or a campus, for example. WLAN systems are based on IEEE 802.11 standard specifications, typically operate within a 100-meter range, and are generally utilized to supplement the communication capacity provided by traditional wired Local Area Networks (LANs) installed in the same geographic area as the WLAN system.

An example of WLAN systems may be WiFi or 'wireless fidelity' systems that utilize specifications conforming to the IEEE 802.11 b standard. In some instances, WiFi networks may enable data transmission rates that meet or even exceed the data rates for third generation (3G) networks. The use of WiFi networks has gained acceptance in many applications as an alternative to wired LANs. For example, locations or areas within airports, hotels, and other services may offer public access to WiFi networks, allowing people to log onto the Internet and to receive emails, for example. These locations may be generally referred to as hotspots.

In some instances, WLAN systems, including WiFi networks, may be operated in conjunction with WPAN systems to provide users with an enhanced overall functionality. For example, Bluetooth technology may be utilized to connect a laptop computer or a handheld wireless terminal to a peripheral device, such as a keyboard, mouse, headphone, and/or printer, while the laptop computer or the handheld wireless terminal is also connected to a campus-wide WLAN network through an access point (AP) located within the building.

Both Bluetooth and WLAN radio devices, such as those used in, for example, handheld wireless terminals, generally operate in the 2.4 GHz (2.4000-2.4835 GHz) Industrial, Scientific, and Medical (ISM) unlicensed band. Other radio devices, such as those used in cordless phones, may also operate in the ISM unlicensed band. While the ISM band provides a suitable low-cost solution for many of short-range wireless applications, it may also have some drawbacks when multiple users operate simultaneously. For example, because of the limited bandwidth, spectrum sharing may be necessary to accommodate multiple users. Multiple active users may also result in significant interference between operating devices. Moreover, in some instances, microwave ovens may also operate in this frequency spectrum and may produce significant interference or blocking signals that may affect Bluetooth and/or WLAN transmissions.

When operating a Bluetooth radio and a WLAN radio in, for example, a wireless device, at least two different types of interference effects may occur. First, when an interfering signal is present in a transmission medium along with the signal-of-interest, a low signal-to-noise-plus-interference ratio (SINR) may result. In this instance, for example, a Bluetooth signal may interfere with a WLAN signal or a WLAN signal may interfere with a Bluetooth signal. The second effect may occur when the Bluetooth and WLAN radio devices are collocated, that is, when they are located in close proximity to each other so that there is a small radio frequency (RF) path loss between their corresponding radio front-end receivers. In this instance, the isolation between the Bluetooth radio front-end and the WLAN radio front-end may be as low as 10 dB, for example. As a result, one radio may desensitize the front-end of the other radio upon transmission. Moreover, since Bluetooth employs transmit power control, the collocated Bluetooth radio may step up its power level when the signal-to-noise ratio (SNR) on the Bluetooth link is low, effectively compromising the front-end isolation between radio devices even further. Low noise amplifiers (LNAs) in the radio front-ends may not be preceded by a channel selection filter and may be easily saturated by the signals in the ISM band, such as those from collocated transmissions. The saturation may result in a reduction in sensitivity or desensitization of the receiver portion of a radio front-end, which may reduce the radio front-end's ability to detect and demodulate the desired signal.

Packet communication in WLAN systems requires acknowledgement from the receiver in order for the communication to proceed. When the isolation between collocated radio devices is low, collisions between WLAN communication and Bluetooth communication, due to greater levels of mutual interference than if the isolation were high, may result in a slowdown of the WLAN communication, as the access point does not acknowledge packets. This condition may continue to spiral downwards until the access point drops the WLAN station. If, in order to avoid this condition, WLAN communication in collocated radio devices is given priority over all Bluetooth communication, then isochronous Bluetooth packet traffic, which does not have retransmission capabilities; may be starved of communication bandwidth. Moreover, this approach may also starve other Bluetooth packet traffic of any communication access. Collocated WLAN/Bluetooth radio devices should therefore be operated so as to maintain WLAN communication rates high while also providing access to Bluetooth communication when necessary.

Different techniques have been developed to address the low isolation problem that occurs between collocated Bluetooth and WLAN radio devices in coexistent operation. These techniques may take advantage of either frequency and/or time orthogonality mechanisms to reduce interference between collocated radio devices. Moreover, these techniques may result from so-called collaborative or non-collaborative mechanisms in Bluetooth and WLAN radio devices, where collaboration refers to any direct communication between the protocols. For example, Bluetooth technology utilizes Adaptive Frequency Hopping (AFH) as a frequency division multiplexing (FDM) technique that minimizes channel interference. In AFH, the physical channel is characterized by a pseudo-random hopping, at a rate of 1600 hops-per-second, between 79 1MHz channels in the Bluetooth piconet. AFH provides a non-collaborative mechanism that may be utilized by a Bluetooth device to avoid frequencies occupied by a spread spectrum system such as a WLAN system. In some instances, the Bluetooth radio may be adapted to modify its hopping pattern based on, for example, frequencies in the ISM spectrum that are not being occupied by other users.

Even when frequency division multiplexing techniques are applied, significant interference may still occur because a strong signal in a separate channel may still act as a blocking signal and may desensitize the radio front-end receiver, that is, increase the receiver's noise floor to the point that the received signal may not be clearly detected. For example, a collocated WLAN radio front-end transmitter generating a 15 dBm signal acts as a strong interferer or blocker to a collocated Bluetooth radio device receiver when the isolation between radio devices is only 10 dB. Similarly, when a Bluetooth radio device is transmitting and a WLAN radio device is receiving, particularly when the Bluetooth radio front-end transmitter is operating as a 20 dBm Class 1 type, the WLAN radio device receiver may be desensed by the Bluetooth transmission as the isolation between radios is reduced.

Other techniques may be based on collaborative coexistence mechanisms, such as those described in the IEEE 802.15.2 - 2003 Recommended Practice for Information Technology - Part 15.2: Coexistence of Wireless Personal Area Networks with Other Wireless Devices Operating in the Unlicensed Frequency Bands. For example, these techniques may comprise Medium Access Control (MAC) layer mechanisms or Physical (PHY) layer mechanisms. The MAC layer techniques may comprise, for example, the Alternating Wireless Medium Access (AWMA) technique or the Packet Traffic Arbitration (PTA) technique. Both the AWMA and the PTA techniques provide a time division multiplexing (TDM) approach to the collocated radio device isolation problem. For example, the AWMA technique partitions a WLAN communication interval into two segments: one for the WLAN system and one for the WPAN system. Each wireless system is then restricted to transmissions in their allocated time segments. On the other hand, the PTA technique provides for each communication attempt by either a collocated WLAN radio device or a Bluetooth radio device to be submitted for arbitration and approval. The PTA may then deny a communication request that would result in collision or interference. The PHY layer technique may comprise, for example, a programmable notch filter in the WLAN radio device receiver to filter out narrow-band WPAN or Bluetooth interfering signals. These techniques may result in some transmission inefficiencies or in the need of additional hardware features in order to achieve better coexistent operation.

Other collaborative coexistence mechanisms may be based on proprietary technologies. For example, in some instances, firmware in the collocated WLAN radio device may be utilized to poll a status signal in the collocated Bluetooth radio device to determine whether Bluetooth communication is to occur. However, polling the Bluetooth radio device may have to be performed on a fairly constant basis and may detract the WLAN radio device from its own WLAN communication operations. If a polling window is utilized instead, where the polling window may be as long as several hundred microseconds, the WLAN radio device has adequate time available to poll the BT radio device, which may indicate that BT communication is to occur. In other instances, the collocated WLAN and Bluetooth radio devices may utilize an interrupt-driven arbitration approach. In this regard, considerable processing time may be necessary for handling the interrupt operation and to determine the appropriate communication schedule based on the priority and type of WLAN and Bluetooth packets.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A system and/or method is provided for a shared antenna control using the output of a voice activity detector, substantially as shown in and/or described in connection with at least one of the figures, as set forth more completely in the claims.
According to an aspect of the invention, a method for handling wireless signals is provided, the method comprising:
detecting voice activity in at least one of a first wireless protocol channel and a second wireless protocol channel in a radio chip within a wireless device that handles communication for said first wireless protocol channel and said second wireless protocol channel via a single antenna; and
adjusting a transmission queue in said radio chip based on said detected voice activity.
Advantageously, said first wireless protocol channel is a Bluetooth (BT) channel.
Advantageously, said second wireless protocol channel is a Wireless Local Area Network (WLAN) channel.
Advantageously, the method further comprises adjusting said transmission queue when at least one of said first wireless protocol channel and said second wireless protocol channel is not transmitting voice information.
Advantageously, the method further comprises generating at least one signal that adjusts said transmission queue.
Advantageously, the method further comprises adjusting a transmission schedule of an acknowledge (ACK) signal for packets received via one of said first wireless protocol channel and said second wireless protocol channel based on said detected voice activity.
Advantageously, the method further comprises adjusting said transmission queue a specified period of time after detected voice activity indicates that at least one of said first wireless protocol channel and said second wireless protocol channel is not transmitting voice information.
Advantageously, the method further comprises detecting said voice activity based on PCM voice samples from at least one of said first wireless protocol channel and said second wireless protocol channel.
According to an aspect of the invention, a machine-readable storage is provided having stored thereon, a computer program having at least one code section for handling wireless signals, the at least one code section being executable by a machine for causing the machine to perform steps comprising:
detecting voice activity in at least one of a first wireless protocol channel and a second wireless protocol channel in a radio chip within a wireless device that handles communication for said first wireless protocol channel and said second wireless protocol channel via a single antenna; and
adjusting a transmission queue in said radio chip based on said detected voice activity.
Advantageously, said first wireless protocol channel is a Bluetooth (BT) channel.
Advantageously, said second wireless protocol channel is a Wireless Local Area Network (WLAN) channel.
Advantageously, the machine-readable storage further comprises code for adjusting said transmission queue when at least one of said first wireless protocol channel and said second wireless protocol channel is not transmitting voice information.
Advantageously, the machine-readable storage further comprises code for generating at least one signal that adjusts said transmission queue.
Advantageously, the machine-readable storage further comprises code for adjusting a transmission schedule of an acknowledge (ACK) signal for packets received via one of said first wireless protocol channel and said second wireless protocol channel based on said detected voice activity.
Advantageously, the machine-readable storage further comprises code for adjusting said transmission queue a specified period of time after detected voice activity indicates that at least one of said first wireless protocol channel and said second wireless protocol channel is not transmitting voice information.
Advantageously, the machine-readable storage further comprises code for detecting said voice activity based on PCM voice samples from at least one of said first wireless protocol channel and said second wireless protocol channel.
According to an aspect of the invention, a system is provided for handling wireless signals, the system comprising:
one or more circuits that enable detecting voice activity in at least one of a first wireless protocol channel and a second wireless protocol channel in a radio chip within a wireless device that handles communication for said first wireless protocol channel and said second wireless protocol channel via a single antenna; and
said one or more circuits enable adjustment of a transmission queue in said radio chip based on said detected voice activity.
Advantageously, said first wireless protocol channel is a Bluetooth (BT) channel.
Advantageously, said second wireless protocol channel is a Wireless Local Area Network (WLAN) channel.
Advantageously, said one or more circuits enable adjustment of said transmission queue when at least one of said first wireless protocol channel and said second wireless protocol channel is not transmitting voice information.
Advantageously, said one or more circuits enable generation of at least one signal that adjusts said transmission queue.
Advantageously, said one or more circuits enable adjustment of a transmission schedule of an acknowledge (ACK) signal for packets received via one of said first wireless protocol channel and said second wireless protocol channel based on said detected voice activity.
Advantageously, said one or more circuits enable adjustment of said transmission queue a specified period of time after detected voice activity indicates that at least one of said first wireless protocol channel and said second wireless protocol channel is not transmitting voice information.
Advantageously, said one or more circuits enable detection of said voice activity based on PCM voice samples from at least one of said first wireless protocol channel and said second wireless protocol channel.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1A is a block diagram of an exemplary WLAN infrastructure network comprising basic service sets (BSSs) integrated using a common distribution system (DS), in connection with an embodiment of the invention.

FIG. 1B is a block diagram of an exemplary WLAN infrastructure network comprising a basic service set (BSS) with stations that support WLAN/Bluetooth coexistence, in accordance with an embodiment of the invention.

FIG. 1C is a block diagram that illustrates an exemplary usage model for a coexistence terminal with collocated WLAN and Bluetooth radio devices, in accordance with an embodiment of the invention.

FIG. 2A is a block diagram that illustrates an exemplary radio chip that supports WLAN and Bluetooth radio operations, in accordance with an embodiment of the invention.

FIG. 2B is a block diagram that illustrates an exemplary single radio chip that supports WLAN and Bluetooth radio operations with a shared receive LNA, in accordance with an embodiment of the invention.

FIG. 3 is a block diagram that illustrates an exemplary implementation of a packet traffic scheduler (PTS) in a single radio chip that supports WLAN and Bluetooth radio operations, in accordance with an embodiment of the invention.

FIG. 4A is a timing diagram that illustrates an exemplary retransmission scheduling of EV3 Bluetooth eSCO packets for a VoWLAN and Bluetooth usage model, in accordance with an embodiment of the invention.

FIG. 4B is a timing diagram that illustrates an exemplary retransmission scheduling of 3-EV3 Bluetooth eSCO packets a VoWLAN and Bluetooth usage model, in accordance with an embodiment of the invention.

FIG. 5 is a block diagram that illustrates an exemplary shared antenna system for a radio chip that supports WLAN and Bluetooth radio operations, in accordance with an embodiment of the invention.

FIG. 6 is a diagram that illustrates an exemplary near end Rx/Rx mode of operation for wireless device comprising a radio chip that supports WLAN and Bluetooth radio operations, in accordance with an embodiment of the invention.

FIG. 7 is a block diagram illustrating an exemplary Bluetooth voice activity detection, in accordance with an embodiment of the invention.

FIG. 8 is a flow diagram illustrating exemplary steps for shared antenna control using Bluetooth voice activity detection, in accordance with an embodiment of the invention.

### DETAILED DESCRIPTION OF THE INVENTION

Certain embodiments of the invention may be found in a method and system for a shared antenna control using the output of a voice activity detector. A single radio chip within a wireless device may handle communication of a Bluetooth (BT) and a Wireless Local Area Network (WLAN) protocol via a single antenna. Simultaneous reception via BT and WLAN channels may be enabled. The single radio chip may enable detection of voice activity in the BT channel and may reduce the BT transmission priority level some time after the voice activity indicates that the BT channel is not transmitting voice information to enable error concealment. Voice activity detection may be based on PCM samples in the BT channel. The single radio chip may transmit an ACK signal to an access point after the BT transmission priority level is reduced.

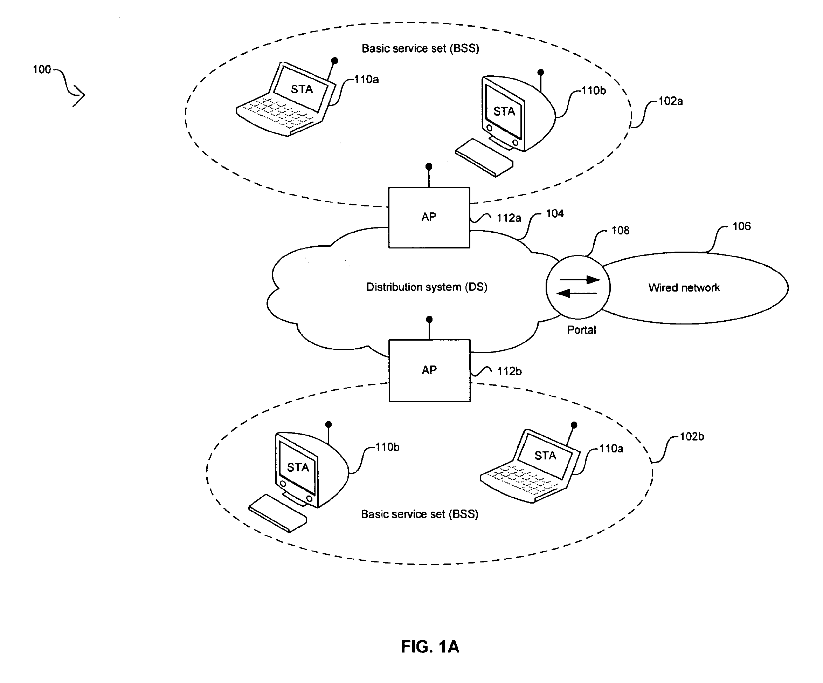

FIG. 1A is a block diagram of an exemplary WLAN infrastructure network comprising basic service sets (BSSs) integrated using a common distribution system (DS), in connection with an embodiment of the invention. Referring to FIG. 1A, the exemplary WLAN infrastructure network 100 shown may comprise a first BSS 102a, a second BSS 102b, a DS 104, a wired network 106, a portal 108, a first access point (AP) 112a, a second AP 102b, and a plurality of WLAN stations (STAs). The BSSs 102a and 102b may represent a fundamental building block of the IEEE 802.11 (WLAN) architecture and may be defined as a group of stations (STAs) that are under the direct control of a single coordination function. The geographical area covered by a BSS is known as the basic service area (BSA). The DS 104 may be utilized to integrate the BSSs 102a and 102b and may comprise suitable hardware, logic, circuitry, and/or code that may be adapted to operate as a backbone network that is responsible for Medium Access Control (MAC) level transport in the WLAN infrastructure network 100. The DS 104, as specified by the IEEE 802.11 standard, is implementation independent. For example, the DS 104 may be implemented utilizing IEEE 802.3 Ethernet Local Area Network (LAN), IEEE 802.4 token bus LAN, IEEE 802.5 token ring LAN, Fiber Distributed Data Interface (FDDI) Metropolitan Area Network (MAN), or another IEEE 802.11 wireless medium. The DS 104 may be implemented utilizing the same physical medium as either the first BSS 102a or the second BSS 102b. However, the DS 104 is logically different from the BSSs and may be utilized only to transfer packets between the BSSs and/or to transfer packets between the BSSs and the wired network 106.

The wired network 106 may comprise suitable hardware, logic, circuitry, and/or code that may be adapted to provide wired networking operations. The wired network 106 may be accessed from the WLAN infrastructure network 100 via the portal 108. The portal 108 may comprise suitable hardware, logic, circuitry, and/or code and may be adapted to integrate the WLAN infrastructure network 100 with non-IEEE 802.11 networks. Moreover, the portal 108 may also be adapted to perform the functional operations of a bridge, such as range extension and/or translation between different frame formats, in order to integrate the WLAN infrastructure network 100 with IEEE 802.11-based networks.

The APs 112a and 112b may comprise suitable hardware, logic, circuitry, and/or code that may be adapted to support range extension of the WLAN infrastructure network 100 by providing the integration points necessary for network connectivity between the BSSs. The STA 110a and the STA 110b correspond to WLAN-enabled terminals that comprise suitable hardware, logic, circuitry, and/or code that may be adapted to provide connectivity to the WLAN infrastructure network 100 via the APs. The STA 110a shown is a laptop computer and may correspond to a mobile station or terminal within the BSS and the STA 110b shown is a desktop computer and may correspond to a fixed or stationary terminal within the BSS. Each BSS may comprise a plurality of mobile or fixed stations and may not be limited to the exemplary implementation shown in FIG. 1A.

In an exemplary embodiment of the invention, at least a portion of the WLAN infrastructure network 100 may correspond to a WiFi or 'wireless fidelity' network that may conform to the IEEE 802.11 b standard specification. In this regard, at least portions of the WLAN infrastructure network 100 that correspond to WiFi networks may enable data transmission rates that meet or even exceed data rates for third generation (3G) networks. Moreover, at least portions of the WLAN infrastructure network 100 may correspond to locations or areas, such as areas within airports, hotels, and other public service locations, that may be utilized to offer public access and to allow people to, for example, log onto the Internet and receive emails.

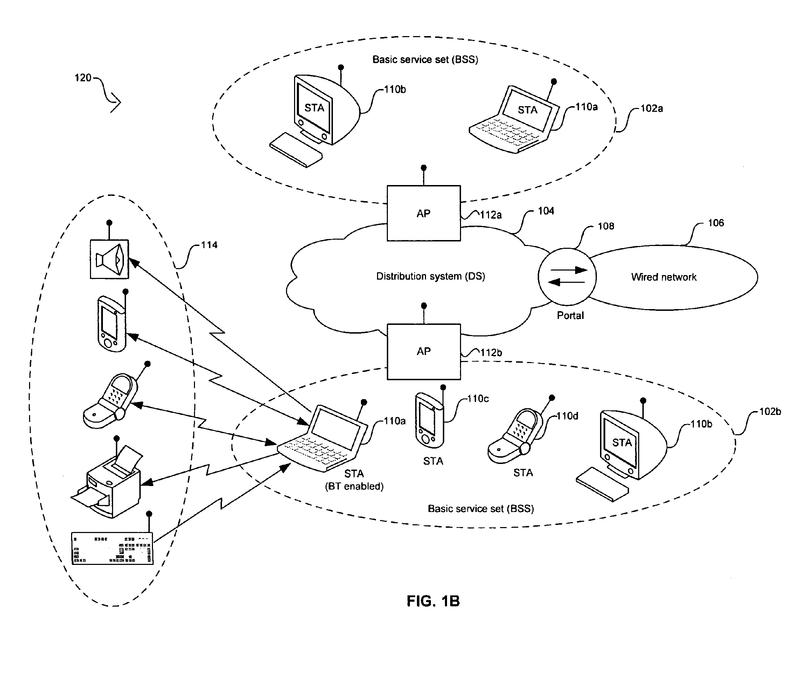

FIG. 1B is a block diagram of an exemplary WLAN infrastructure network comprising a basic service set (BSS) with stations that support WLAN/Bluetooth coexistence, in accordance with an embodiment of the invention. Referring to FIG. 1B, the exemplary WLAN infrastructure network 120 shown differs from the WLAN infrastructure network 100 in FIG. 1A in that at least one BSS comprises at least one station or terminal that supports Bluetooth technology. In this regard, the second BSS 102b comprises additional mobile terminals or stations such as a Personal Digital Assistant (PDA) 110c and a mobile phone 110d while the laptop computer 110a is now shown to be Bluetooth-enabled. The peripheral devices 114 shown may be part of the Wireless Personal Area Network (WPAN) supported by the Bluetooth-enabled laptop computer. For example, the laptop computer 110a may communicate via Bluetooth technology with a keyboard, a mouse, a printer, a mobile phone, a PDA, and/or a set of headphones or speakers, where these devices and the laptop computer 110a may form an ad-hoc Bluetooth piconet. Generally, a Bluetooth piconet may comprise a master device or terminal and up to seven slave devices or terminals. In this exemplary implementation, the laptop computer 110a may correspond to the master Bluetooth terminal and the peripheral devices 114 may correspond to the slave Bluetooth terminals.

The Bluetooth-enabled laptop computer 110a in FIG. 1B may comprise a WLAN radio device and a Bluetooth radio device that allows it to communicate with the WLAN infrastructure network 100 via the AP 112b and with the Bluetooth piconet respectively. Because of the size of the laptop computer 110a, locating the WLAN and BT radio devices in the same terminal may result in signal interference between WLAN and BT communications. When the PDA 110c and/or the mobile phone 110d are Bluetooth-enabled, the small form factor of these coexistence terminals may result in a small radio frequency (RF) path loss between WLAN and BT radio devices and likely interference between WLAN and BT communications.

The Bluetooth-enabled laptop computer 110a, the PDA 110c and/or the mobile phone 110d may also be enabled to provide communication via, for example, a cellular network in addition to communication that may occur via the WLAN infrastructure network 120. For example, the Bluetooth-enabled mobile phone 110d may be utilized to establish a connection with a cellular network for a telephone call while also utilizing the WLAN infrastructure network 120. The Bluetooth-enabled mobile phone 110d may also be utilized to establish a connection with the WLAN infrastructure network 120 for voice communication, such as a voice-over-IP (VoIP) telephone call. Moreover, the user of the Bluetooth-enabled mobile phone 110d may utilize a wireless peripheral device, such as a Bluetooth-enabled wireless headset, during the telephone call to enable a hands-off call.

In an exemplary embodiment of the invention, at least a portion of the WLAN infrastructure network 120 may correspond to a WiFi or 'wireless fidelity' network that may conform to the IEEE 802.11 b standard specification.

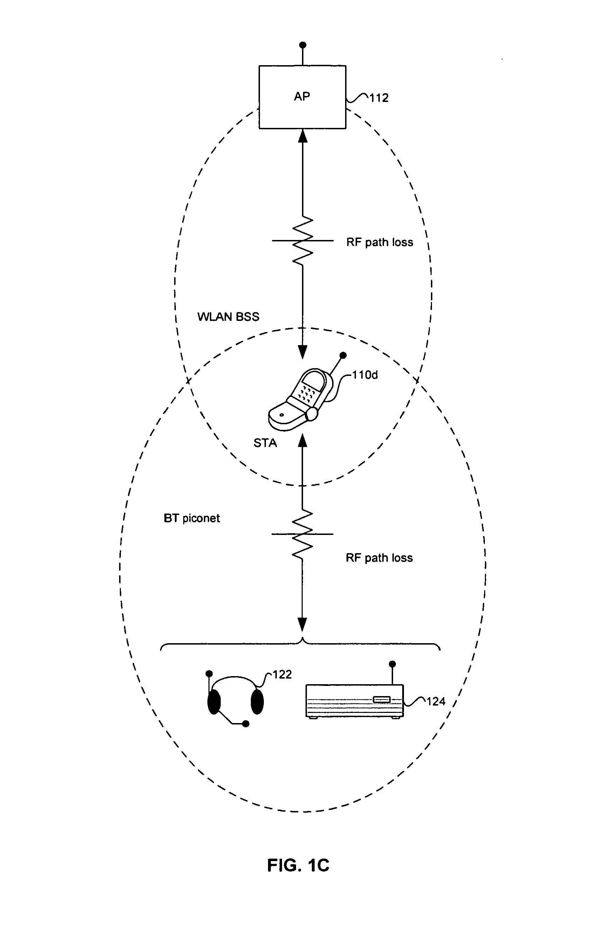

FIG. 1C is a block diagram that illustrates an exemplary usage model for a coexistence terminal with collocated WLAN and Bluetooth radio devices, in accordance with an embodiment of the invention. Referring to FIG. 1C, the mobile phone 110d may comprise a WLAN radio device to communicate with the AP 112c. The RF path loss between the AP 112c and the mobile phone 110d may be, for example, 65 dB for 10 meters. The IEEE 802.15.2, for example, provides a formula for calculating the RF path loss. The mobile phone 110d may also be Bluetooth-enabled and may comprise a Bluetooth radio device to communicate with, for example, a Bluetooth headset 122 and/or a home gateway 124 with Bluetooth cordless telephony capability. Because of the small form factor of the mobile phone 110d, the WLAN and Bluetooth radio devices may be in such close proximity to each other within the same coexistence terminal that the isolation between them is sufficiently low to allow desensitization of one radio device by the other's transmissions.

The Bluetooth-enabled mobile phone 110d may comprise two maximum transmission power levels. For example, the mobile phone 110d may operate as a Class 1 power level terminal with a maximum transmission power of 20 dBm to communicate with the home gateway 124. In another example, the mobile phone 110d may operate as a Class 2 power level terminal with a maximum transmission power of 4 dBm to communicate with the Bluetooth headset 122. The Bluetooth headset 122 may comprise suitable hardware, logic, circuitry, and/or code that may be adapted to receive and/or transmit audio information. For example, the Bluetooth handset 122 may be adapted to receive and/or transmit Continuous Variable Slope Delta (CVSD) modulated voice from the mobile phone 110d or receive A2DP, such as MP3, from the mobile phone 110d. The home gateway 124 may comprise suitable hardware, logic, circuitry, and/or code that may be adapted to receive and/or transmit data and/or audio information. For example, the home gateway 124 may receive and/or transmit 64 kb/s CVSD modulated voice.

In operation, the Bluetooth-enabled mobile phone 110d may receive voice or audio content from the WLAN infrastructure network via the AP 112c and may communicate the voice or audio contents to the Bluetooth headset 122 and/or the voice contents to the home gateway 124. Similarly, the Bluetooth headset 122 and/or the home gateway 124 may communicate voice contents to the Bluetooth-enabled mobile phone 110d which in turn may communicate the voice contents to other users through the WLAN infrastructure network.

In accordance with various embodiments of the invention, the Bluetooth-enabled mobile phone 110d may receive voice or audio content from a cellular network and may communicate the voice or audio contents to the Bluetooth headset 122 and/or the voice contents to the home gateway 124. Similarly, the Bluetooth headset 122 and/or the home gateway 124 may communicate voice contents to the Bluetooth-enabled mobile phone 110d which in turn may communicate the voice contents to other users through the cellular network.

A Bluetooth-enabled station, such as the Bluetooth-enabled mobile phone 110d in FIG. 1C, for example, may support the communication of multiple Bluetooth packets. For example, a Bluetooth-enabled station may support common packets types, synchronous connection-oriented (SCO) logical transport packets, extended SCO (eSCO) logical transport packets, and/or asynchronous connection-oriented (ACL) logical transport packets. Notwithstanding the embodiment of the invention disclosed in FIG. 1C, the invention need not be so limited.

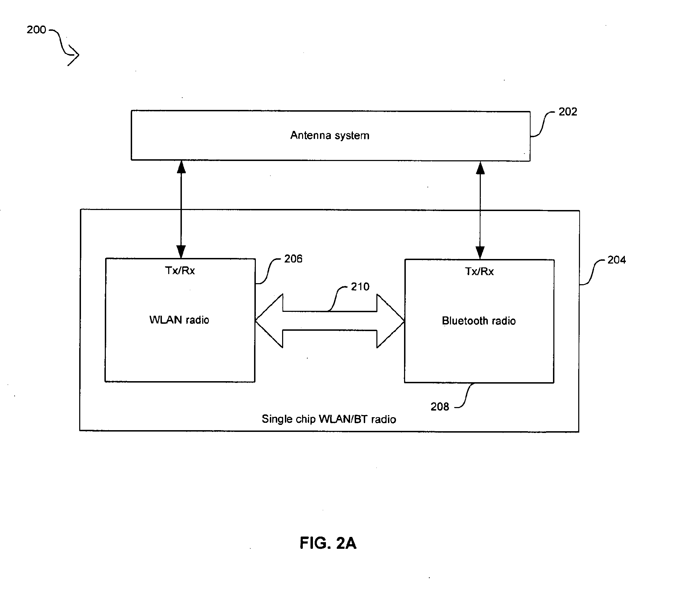

FIG. 2A is a block diagram that illustrates an exemplary single radio chip that supports WLAN and Bluetooth radio operations, in accordance with an embodiment of the invention. Referring to FIG. 2A, there is shown a WLAN/Bluetooth collaborative radio architecture 200 that may comprise a WLAN/Bluetooth coexistence antenna system 202 and a single chip WLAN/Bluetooth (WLAN/BT) radio device 204. The single chip WLAN/BT radio device 204 may comprise a WLAN radio portion 206 and a Bluetooth radio portion 208. The single chip WLAN/BT radio device 204 may be implemented based on a system-on-chip (SOC) architecture, for example.

The WLAN/Bluetooth coexistence antenna system 202 may comprise suitable hardware, logic, and/or circuitry that may be adapted to provide WLAN and Bluetooth communication between external devices and a coexistence terminal. The WLAN/Bluetooth coexistence antenna system 202 may comprise at.least one antenna for the transmission and reception of WLAN and Bluetooth packet traffic. In this regard, the antenna or antennas utilized in the WLAN/Bluetooth coexistence antenna system 202 may be designed to meet the form factor requirements of the coexistence terminal. In some instances, at least a portion of the WLAN/Bluetooth coexistence antenna system 202 may be integrated within the single chip WLAN/Bluetooth radio device 204.

The WLAN/Bluetooth coexistence antenna system 202 may support at least one mode of operation. For example, the WLAN/Bluetooth coexistence antenna system 202 may support a Bluetooth transmit (BT TX) and WLAN transmit (WLAN TX) mode of operation. The WLAN/Bluetooth coexistence antenna system 202 may also support a Bluetooth receive (BT RX) and WLAN transmit (WLAN TX) mode of operation. The WLAN/Bluetooth coexistence antenna system 202 may also support a Bluetooth transmit (BT TX) and WLAN receive (WLAN RX) mode of operation. The WLAN/Bluetooth coexistence antenna system 202 may also support a Bluetooth receive (BT RX) and WLAN receive (WLAN RX) mode of operation.

The WLAN radio portion 206 may comprise suitable logic, circuitry, and/or code that may be adapted to process WLAN protocol packets for communication. The WLAN radio portion 206 may be adapted to transfer and/or receive WLAN protocol packets and/or information to the WLAN/Bluetooth coexistence antenna system 202 via a single transmit/receive (Tx/Rx) port. In some instances, the transmit port (Tx) may be implemented separately from the receive port (Rx). The WLAN radio portion 206 may also be adapted to generate signals that control at least a portion of the operation of the WLAN/Bluetooth coexistence antenna system 202. Firmware operating in the WLAN radio portion 206 may be utilized to schedule and/or control WLAN packet communication.

The WLAN radio portion 206 may also be adapted to receive and/or transmit priority signals 210. The priority signals 210 may be utilized to schedule and/or control the collaborative operation of the WLAN radio portion 206 and the Bluetooth radio portion 208. In this regard, the priority signals 210 may comprise a plurality of signals to implement various levels of transmission priority. For example, a single signal implementation may result in two transmission priority levels, a two-signal implementation may result in up to four different transmission priority levels, and a three-signal implementation may result in up to eight different transmission priority levels.

The Bluetooth radio portion 208 may comprise suitable logic, circuitry, and/or code that may be adapted to process Bluetooth protocol packets for communication. The Bluetooth radio portion 208 may be adapted to transfer and/or receive Bluetooth protocol packets and/or information to the WLAN/Bluetooth coexistence antenna system 202 via a single transmit/receive (Tx/Rx) port. In some instances, the transmit port (Tx) may be implemented separately from the receive port (Rx). The Bluetooth radio portion 208 may also be adapted to generate signals that control at least a portion of the operation of the WLAN/Bluetooth coexistence antenna system 202. Firmware operating in the Bluetooth radio portion 208 may be utilized to schedule and/or control Bluetooth packet communication. The Bluetooth radio portion 208 may also be adapted to receive and/or transmit priority signals 210. The priority signals 210 may be utilized to, schedule and/or control a queuing mechanism for communication by the WLAN radio portion 206 and the Bluetooth radio portion 208. Moreover, the priority operation or queuing mechanism may result in queuing hysteresis. In this regard, when sporadic packets are transmitted which the receiver is likely to discard them, the priority operation or queuing mechanism may enable discarding the packets from transmission in order to improve power consumption and/or to limit interference effects, for example.

A portion of the operations supported by the WLAN radio portion 206 and a portion of the operations supported by the Bluetooth radio portion 208 may be performed by common logic, circuitry, and/or code.

The Bluetooth radio portion 208 may also enable voice activity detection (VAD). For example, the Bluetooth radio portion 208 may utilize pulse coded modulation (PCM) samples of voice information stored within the Bluetooth radio portion 208 and may correlate voice activity decisions in a block of these samples to the voice payload comprised within a BT SCO and/or BT eSCO packet. This approach may be utilized based on the deterministic nature of the processing of linear samples into continuously variable slope delta-modulation (CVSD)-encoded packet payload.

In some instances, at least a portion of either the WLAN radio portion 206 or the Bluetooth radio portion 208 may be disabled and the wireless terminal may operate in a single-communication mode, that is, coexistence may be disabled. When at least a portion of the WLAN radio portion 206 is disabled, the WLAN/Bluetooth coexistence antenna system 202 may utilize a default configuration to support Bluetooth communication. When at least a portion of the Bluetooth radio portion 208 is disabled, the WLAN/Bluetooth coexistence antenna system 202 may utilize a default configuration to support WLAN communication.

Packet communication between the WLAN/Bluetooth coexistence antenna system 202 and the single chip WLAN/Bluetooth (WLAN/BT) radio device 204 may take place via a radio front-end topology in the single chip WLAN/Bluetooth (WLAN/BT) radio device 204. The radio front-end topology may be implemented partially in the WLAN radio portion 206 and/or partially in the Bluetooth radio portion 208, for example.

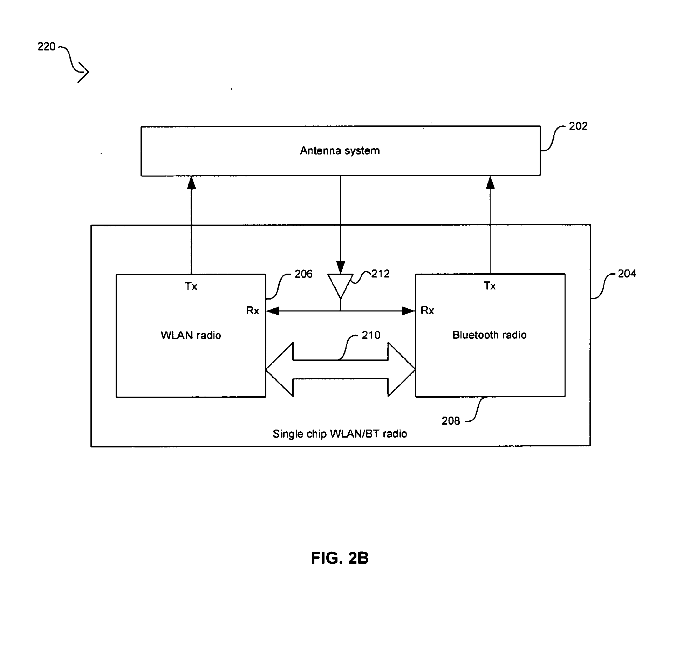

FIG. 2B is a block diagram that illustrates an exemplary single radio chip that supports WLAN and Bluetooth radio operations with a shared receive LNA, in accordance with an embodiment of the invention. Referring to FIG. 2B, there is shown a WLAN/Bluetooth collaborative radio architecture 220 that may comprise the WLAN/Bluetooth coexistence antenna system 202 and the single chip WLAN/Bluetooth (WLAN/BT) radio device 204. The single chip WLAN/BT radio device 204 may comprise the WLAN radio portion 206, the Bluetooth radio portion 208, and a shared received low-noise amplifier (LNA) 212. The operations of the WLAN/Bluetooth coexistence antenna system 202 and the single chip WLAN/BT radio device 204 may be the same or substantially similar to the operations disclosed in FIG. 2A. The single chip WLAN/BT radio device 204 may be implemented based on a system-on-chip (SOC) architecture, for example.

In accordance with various embodiments of the invention, the transmit port (Tx) of the WLAN radio portion 206 may be implemented separately from the receive port (Rx). Similarly, the transmit port (Tx) of the Bluetooth radio portion 208 may be implemented separately from the receive port (Rx). The shared receive LNA 212 may be utilized to receive both WLAN and Bluetooth signals from the WLAN/Bluetooth coexistence antenna system 202 and communicate the received signals to the corresponding radio receive port.

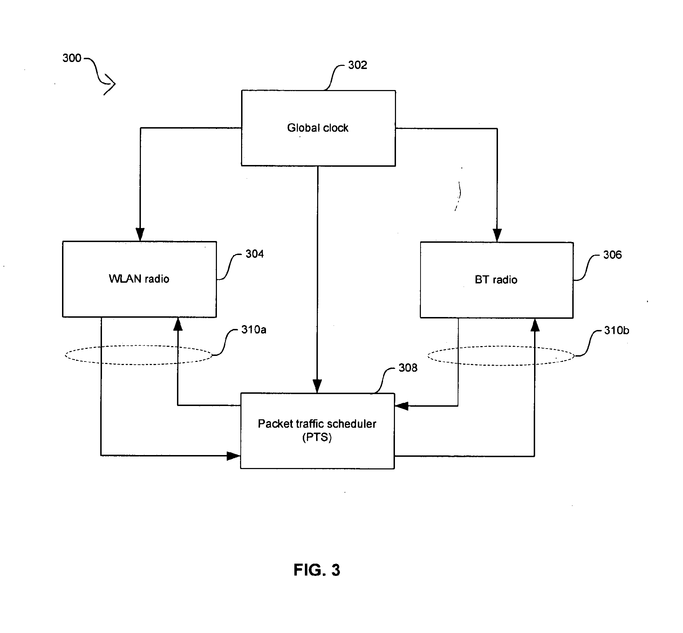

FIG. 3 is a block diagram that illustrates an exemplary implementation of a packet traffic scheduler (PTS) in a single radio chip that supports WLAN and Bluetooth radio operations, in accordance with an embodiment of the invention. Referring to FIG. 3, there is shown a single chip WLAN/BT radio device 300 that may comprise a global clock 302, WLAN radio portion 304, a Bluetooth radio portion 306, and a packet traffic scheduler (PTS) 308. The global clock 302 may be chosen to be the clock that corresponds to the Bluetooth radio portion 306, for example.

The WLAN radio portion 304 may comprise suitable logic, circuitry, and/or code that may be adapted to process WLAN protocol packets for communication. In this regard, the WLAN radio portion 304 may be substantially similar to the WLAN radio portion 206 described in FIGS. 2A-2B. The WLAN radio portion 304 may be adapted to communicate with the PTS 308 via control and/or data signals 310a. A portion of the control and/or data signals 310a may comprise WLAN transmission priority level information. The control and/or data signals 310a may comprise information of a current WLAN transmission priority level. The control and/or data signals 310a may comprise information as to future WLAN transmission requirements by the WLAN radio portion 304. The control and/or data signals 310a may also comprise information to reduce or increase the WLAN transmission priority level in the WLAN radio portion 304. The PTS 308 may modify the WLAN transmission priority level via the control and/or data signals 310a based, at least in part, on Bluetooth transmission priority level information received by the PTS 308 from the Bluetooth radio portion 306. The PTS 308 may also be adapted to modify the WLAN transmission priority level base in, for example, the type of packets that are being communicated.

The Bluetooth radio portion 306 may comprise suitable logic, circuitry, and/or code that may be adapted to process Bluetooth protocol packets for communication. In this regard, the Bluetooth radio portion 306 may be substantially similar to the Bluetooth radio portion 208 described in FIGS. 2A-2B. The Bluetooth radio portion 306 may be adapted to communicate with the PTS 308 via control and/or data signals 310b. A portion of the control and/or data signals 310b may comprise Bluetooth transmission priority level information. The control and/or data signals 310b may comprise information related to a current Bluetooth transmission priority level. In this regard, the Bluetooth transmission priority level may be based on voice activity detection operations performed by the Bluetooth radio portion 306, for example. The control and/or data signals 310b may comprise information related to future Bluetooth transmission requirements by the Bluetooth radio portion 306. The control and/or data signals 310b may also comprise information to reduce or increase the Bluetooth transmission priority level in the Bluetooth radio portion 306.

The PTS 308 may modify the Bluetooth transmission priority level via the control and/or data signals 310b based, at least in part, on WLAN transmission priority level information received by the PTS 308 from the WLAN radio portion 304. Additional non-real time status information may be entered to the PTS 308. This information may comprise, but need not be limited to, current WLAN channel, current WLAN operation mode, such as best effort traffic or QoS, Bluetooth operation mode, such as idle, SCO, eSCO, ACL, page, master/slave, and/or Bluetooth AFH hop set, for example.

In accordance with various embodiments of the invention, various portions of the operations supported by the WLAN radio portion 304 and various portions of the operations supported by the Bluetooth radio portion 306 may be performed by common logic, circuitry, and/or code. Exemplary common logic, circuitry, and/or code may comprise front-end radio receivers, packet processing blocks, packet scheduling blocks, and/or priority level processing, for example. This approach may be utilized to, for example, reduce power consumption and/or reduce the die size of the single chip WLAN/BT radio device 300.

The PTS 308 may comprise suitable logic, circuitry, and/or code that may be adapted to schedule WLAN transmissions and/or Bluetooth transmissions based on WLAN transmission priority level information, Bluetooth transmission priority level information, future WLAN transmission requirements, and/or future Bluetooth transmission requirements. In this regard, the PTS 308 need not be limited to per-packet arbitration and/or authorization of current WLAN or Bluetooth transmission needs. The PTS 308 may be adapted to generate signals that may modify the Bluetooth transmission priority level in the Bluetooth radio portion 306 and/or modify the WLAN transmission priority level in the WLAN radio portion 304. The PTS 308 may be implemented separately from the WLAN radio portion 304 or the Bluetooth radio portion 306 as shown in FIG. 3. In other implementations, at least portions of the PTS 308 may be implemented in the WLAN radio portion 304 and/or the Bluetooth radio portion 306.

The global clock 302 may comprise suitable logic, circuitry, and/or code that may be adapted to generate a single clock source for the WLAN radio portion 304, the Bluetooth radio portion 306, and/or the PTS 308. The use of the global clock 302 may allow the PTS 308 to coordinate, schedule, and/or synchronize current and/or future WLAN and Bluetooth transmissions with improved timing accuracy than if separate clocks were utilized for WLAN and Bluetooth transmissions. The global clock 302 may be based on the Bluetooth clock, for example.

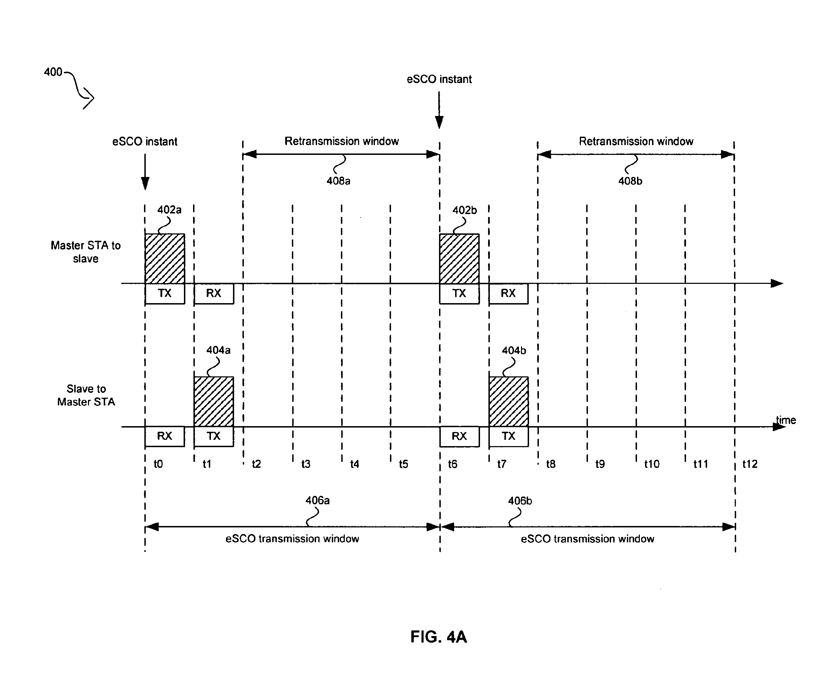

FIG. 4A is a timing diagram that illustrates an exemplary retransmission scheduling of EV3 Bluetooth eSCO packets for a voice-over-WLAN (VoWLAN) and Bluetooth usage model, in accordance with an embodiment of the invention. Referring to FIG. 4A, there is shown a Bluetooth transmission diagram 400 that corresponds to an instance when Bluetooth radio and WLAN radio supporting VoWLAN communication, such as voice-over-IP (VoIP), for example, are operating collaboratively and are collocated within a single WLAN/BT chip radio device in a mobile device, such as a mobile phone, for example. This usage model may be implemented when, for example, a Bluetooth-enabled headset, such as the headset 122 in FIG. 1C, communicates with the mobile device via the Bluetooth protocol and the mobile device simultaneously communicates with an access point via the WLAN protocol.

The Bluetooth communication may occur via an extended synchronous connection-oriented (eSCO) logical transport, for example. The eSCO logical transport is a symmetric or asymmetric, point-to-point link between the master and a specific slave. The eSCO reserves slots on the physical channel and may therefore be considered as a circuit-switched connection between the master and the slave. The eSCO links may offer a number of extensions over the standard SCO links, in that they support a more flexible combination of packet types and selectable data contents in the packets and selectable slot periods, allowing a range of synchronous bit rates to be supported. An eSCO links may also offer limited retransmission of packets, unlike SCO links where there is no retransmission. If retransmissions are required, they may take place in the slots that follow the reserved slots, otherwise the slots may be used for other traffic, for example.

An eSCO packet may comprise a cyclic redundancy check (CRC) code and retransmission may be applied when no acknowledgement of proper reception is received in the reserved timeslot. The eSCO packet may be utilized for 64kb/s audio transmission, transparent data transmission at 64kbs/s, and/or for other transmission rates, for example. The Bluetooth protocol specifies an EV3 packet as one implementation of an eSCO packet that may comprise between 1 and 30 information bytes and a 16-bit CRC code.

The packets 402a and 402b, in time slots t0 and t6 in FIG. 4A respectively, may be EV3 packets transmitted from a master station (STA) to a slave device. In this exemplary usage model, the master station may correspond to the mobile device and the slave device may correspond to the Bluetooth-enabled headset, for example. Similarly, packets 404a and 404b, in time slots t1 and t7 respectively, may be EV3 packets transmitted from the slave device to the master station. The eSCO transmission windows 406a and 406b may correspond to intervals of time for the transmission of eSCO packets such as EV3 packets, for example. The time interval of the eSCO transmission window 406a comprises time slots t0 through t5. The time interval of the eSCO transmission window 406b comprises time slots t6 and through t11.

The retransmission windows 408a and 408b may correspond to intervals of time that may be utilized when the intended communication did not occur correctly in the reserved timeslots. For example, during the retransmission window 408a an acknowledgment of receipt of packet 402a by the Bluetooth-enabled headset may be received at the mobile device. Similarly, during the retransmission window 408b an acknowledgment of receipt of packet 402b by the Bluetooth-enabled headset may be received at the mobile device. The time interval of the retransmission window 408a comprises time slots t2 through t5 while the time interval of the retransmission window 408b comprises time slots t8 and through t11, for example.

When an eSCO packet transmission may not occur in the reserved eSCO time slots, such as time slot t0 for the master STA without causing a collision with the TXPO interval, the PTS 308 in FIG. 3 may reschedule transmission of the eSCO packet within the retransmission window 408a, for example. The VoWLAN communication in this exemplary usage model may support quality-of-service (QoS) features such as transmission opportunities (TXOPs) that provide an interval of time during which a WLAN station may transmit a WLAN packet. The WLAN protocol may also support QoS in AV, video, and VolP applications, for example. In this regard, the PTS 308 may utilize Bluetooth retransmission information and/or the WLAN TXOP information to synchronize and/or schedule an eSCO packet retransmission when necessary. The PTS 308 may be adapted to determine the retransmission schedule based on current priority levels for WLAN and Bluetooth transmission.

Referring to FIG. 4A, during the eSCO transmission window 406a, when the slave device does not acknowledge reception of the packet 402a during the retransmission window 406a, the PTS 308 may schedule retransmission of the packet 402a in a subsequent eSCO transmission window such as the eSCO transmission window 406b. In this regard, the time interval of the eSCO transmission window 406b may be determined based on the WLAN transmission opportunities. Moreover, the PTS 308 may coordinate the eSCO transmission window 406b and the transmission opportunities based on the global clock 302. During the eSCO transmission window 406b, the packet 402a may be retransmitted to the slave device as the packet 402b, for example.

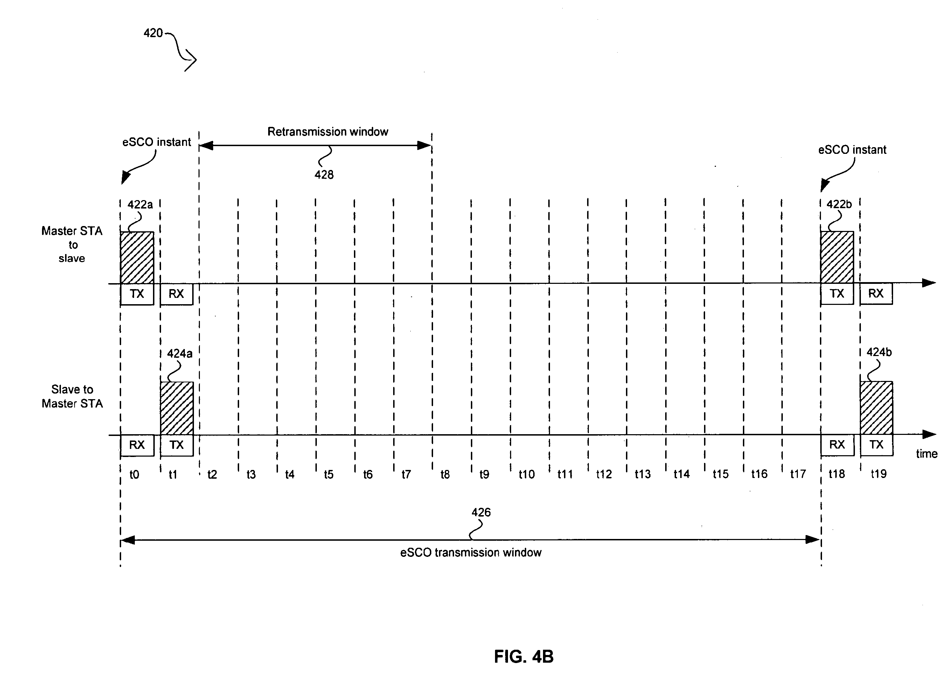

FIG. 4B is a timing diagram that illustrates an exemplary retransmission scheduling of 3-EV3 Bluetooth eSCO packets for a VoWLAN and Bluetooth usage model, in accordance with an embodiment of the invention. Referring to FIG. 4B, there is shown a Bluetooth transmission diagram 420 that corresponds to an instance when Bluetooth radio and WLAN radio supporting VoWLAN communication, such as voice-over-IP (VoIP), for example, are operating collaboratively and are collocated in a single WLAN/BT chip radio device in a mobile device, such as a mobile phone, for example. The Bluetooth communication may occur via an eSCO logical transport utilizing 3EV3 packets, for example. The 3-EV3 packet may be similar to the EV3 packet except that the payload is modulated using 8DPSK. The 3-EV3 packet type may be used for supporting 64 kbps BT voice traffic, similar to the EV3 and HV3 packet types. The 3-EV3 packet type may have between 1 and 90 information bytes plus a 16-bit CRC code. The bytes may not be protected by FEC. A 3-EV3 packet may cover up to a single time slot. There is no payload header present in a 3-EV3 packet.

The packets 422a and 422b, in time slots t0 and t18 in FIG. 4B respectively, may be 3-EV3 packets transmitted from a master station (STA) to a slave device. Similarly, packets 424a and 424b, in time slots t1 and t19 respectively, may be 3-EV3 packets transmitted from the slave device to the master station. The eSCO transmission window 426 may correspond to a time interval for the transmission of eSCO packets such as 3-EV3 packets, for example. The time interval of the eSCO transmission window 426 comprises time slots to through t17. The retransmission windows 428 may correspond to a time interval that may be utilized when the intended communication did not occur correctly in the reserved timeslots. For example, during the retransmission window 428 an acknowledgment of receipt of packet 422a by the Bluetooth-enabled headset may be received at the mobile device. The time interval of the retransmission window 428 comprises time slots t2 through t8. In this regard, the retransmission window 428 may be configured to be longer or shorter than the exemplary embodiment described in FIG. 4B

When an eSCO packet transmission may not occur in the reserved eSCO time slots, such as time slot t0 for the master STA without causing a collision with the TXPO interval, the PTS 308 in FIG. 3 may reschedule transmission of the eSCO packet within the retransmission window 428, for example. In this regard, the PTS 308 may utilize Bluetooth retransmission information and/or the WLAN TXOP information to synchronize and/or schedule an eSCO packet retransmission when necessary. The PTS 308 may enable determining the retransmission schedule based on current priority levels for WLAN and Bluetooth transmission.

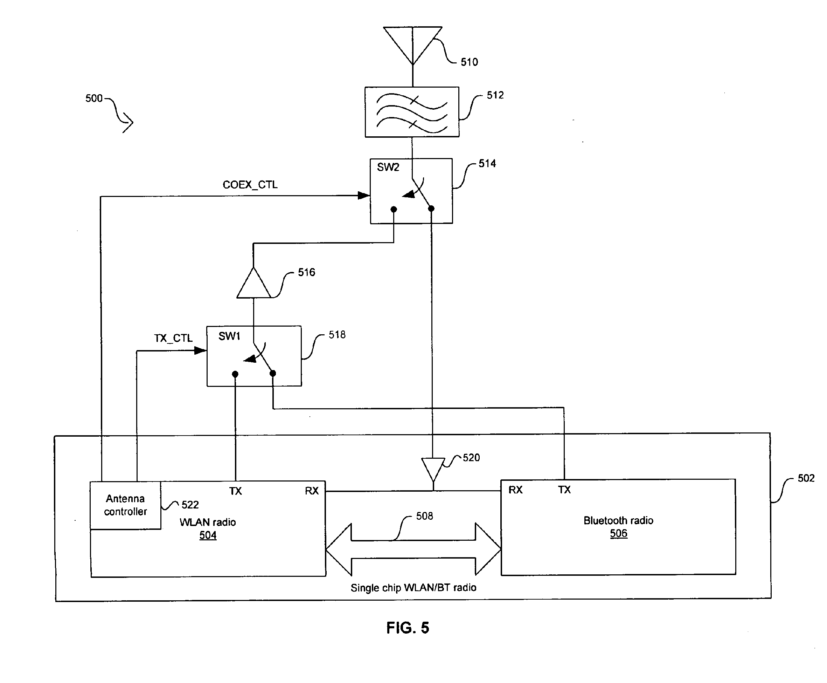

FIG. 5 is a block diagram illustrating an exemplary usage model for the single IC that supports WLAN and Bluetooth radio operations with one antenna, in accordance with an embodiment of the invention. Referring to FIG. 5, the WLAN/Bluetooth collaborative radio architecture 500 may comprise a single antenna 510, a bandpass filter 512, a first antenna switch (SW1) 518, a second antenna switch (SW2) 514, a power amplifier (PA) 516, a shared low noise amplifier (LNA) 520, and a single chip WLAN/Bluetooth (WLAN/BT) radio device 502. The single chip WLAN/BT radio device 502 may comprise a WLAN radio portion 504 and a Bluetooth radio portion 506. The WLAN radio portion 504 may comprise an antenna controller 522, for example.

The single antenna 510 may comprise suitable logic, circuitry, and/or code that may be adapted to provide transmission and reception of Bluetooth and WLAN communication. In this regard, the single antenna 510 may be utilized for transmission and reception of a plurality of communication protocols. The bandpass filter 512 may comprise suitable hardware, logic, and/or circuitry that may be adapted to perform bandpass filtering on communication signals. The bandpass filter 512 may be implemented by utilizing a polyphase filter, for example. The bandpass filter 512 may be configured to conform to the bandpass requirements for the ISM band, for example.

The SW1 518 and the SW2 514 may comprise suitable logic, circuitry, and/or code that may be adapted to select from signals received at two input ports one that may be connected to an output port. The SW1 518 and SW2 514 may be implemented by utilizing, for example, single pull double throw (SPDT) switching devices. The selection operation of the SW1 518 may be controlled by a control signal such as a WLAN transmission control (TX_CTL) signal generated by the antenna controller 522. The selection operation of the SW2 514 may be controlled by a control signal such as the coexistence control (COEX_CTL) signal generated by the antenna controller 522. Notwithstanding, the invention need not be so limited. The SW1 518 and the SW2 514 may be implemented in a manner that may enable various modes of operation. For example, the SW1 518 and the SW2 514 may support a Bluetooth transmit (BT TX) and WLAN transmit (WLAN TX) mode of operation. The SW1 518 and the SW2 514 may also support a Bluetooth receive (BT RX) and WLAN transmit (WLAN TX) mode of operation. The SW1 518 and the SW2 514 may also support a Bluetooth transmit (BT TX) and WLAN receive (WLAN RX) mode of operation. The SW1 518 and the SW2 514 may also support a Bluetooth receive (BT RX) and WLAN receive (WLAN RX) mode of operation.

The WLAN radio portion 504 in the single chip WLAN/BT radio device 502 may comprise suitable logic, circuitry, and/or code that may be adapted to process WLAN protocol packets for communication. The antenna controller 522 in the WLAN radio portion 504 may comprise suitable logic, circuitry, and/or code that may be adapted to generate at least the TX_CTL and/or COEX_CTL control signals for configuring the station to receive and/or transmit WLAN and/or Bluetooth data. As shown, the WLAN radio portion 504 may comprise separate ports for transmission (Tx) and reception (Rx) of WLAN packet traffic. However, a single TX/RX port may also be utilized for WLAN communication. The WLAN radio portion 504 may be adapted to generate and/or receive at least one priority signal 508 for controlling and/or scheduling collaborative communication with the Bluetooth radio portion 506.

The Bluetooth radio portion 506 may comprise suitable logic, circuitry, and/or code that may be adapted to process Bluetooth protocol packets for communication. As shown, the Bluetooth radio portion 506 may comprise separate ports for transmission (Tx) and reception (Rx) of Bluetooth packet traffic. However, a single TX/RX port may also be utilized for Bluetooth communication. The Bluetooth radio portion 506 may be adapted to generate and/or receive at least one priority signal 508 for controlling and/or scheduling collaborative communication with the WLAN radio portion 504. The priority signals 508 may be utilized to schedule and/or control a queuing mechanism for communication by the WLAN radio portion 504 and the Bluetooth radio portion 506. Moreover, the priority operation or queuing mechanism may result in queuing hysteresis. In this regard, when sporadic packets are transmitted which the receiver is likely to discard them, the priority operation or queuing mechanism may enable discarding the packets from transmission in order to improve power consumption and/or to limit interference effects, for example.

The Bluetooth radio portion 506 may utilize voice detection activity in determining the priority level for Bluetooth data communication. In this regard, the Bluetooth radio portion 506 may update or change the priority signal 508 to the WLAN radio portion 504 to indicate the change in priority level that may have resulted from changes in voice detection activity.

In some instances, either WLAN communication or Bluetooth communication may be disabled and the station may not operate in a coexistence mode. When the WLAN communication is disabled, the SW1 518 and/or the SW2 514 may utilize a default configuration to support Bluetooth communication. When the Bluetooth communication is disabled, the SW1 518 and/or the SW2 514 may utilize a default configuration to support WLAN communication.

The shared LNA 520 may comprise suitable hardware, logic, and/or circuitry that may be adapted to amplify received signals and communicate the amplified signals to the appropriate radio. For example, received Bluetooth signals may be communicated to the Rx port of the Bluetooth radio portion 506 while received WLAN signals may be communicated to the Rx port of the WLAN radio portion 504. The PA 516 may comprise suitable logic, circuitry, and/or code that may be adapted to amplify Bluetooth and/or WLAN transmission signals. The PA 716 may provide, for example, a 20 dB gain and may be implemented on-chip or off-chip. In this regard, the PA 516 may be utilized to provide class 1 operations for Bluetooth transmissions.

In some instances; the operation of a wireless station that supports WLAN and Bluetooth communication, such as a wireless station that utilizes the WLAN/Bluetooth collaborative radio architecture 500 disclosed in FIG. 5, may correspond to a mode of operation in which there may be Bluetooth far-end speech and Bluetooth near-end silence or background noise. In such instances, the single, antenna 510 may be utilized to receive the Bluetooth far-end speech information as low priority Bluetooth signals in the coexistence scheme. However, if the wireless station is not idle, the wireless station may deny the Bluetooth radio portion 506 access to the antenna 510 for low priority requests.

In another example, a wireless station may be enabled to support coexistence for voice-over WLAN (VoWLAN) and Bluetooth HV-3 packets. In this regard, when there is no near-end Bluetooth speech, that is, the wireless station is not transmitting Bluetooth signals, there may be generally several seconds during which the single antenna 510 may be connected to the WLAN radio portion 504 for enabling access point (AP) to station communication, for example. When a valid packet is received by the wireless station, the wireless station may transmit an acknowledgment (ACK) packet to the AP, which may result in a collision with Bluetooth packets being received in a Bluetooth receive (RX) slot as shown in FIGS. 4A-4B. Since the Bluetooth RX slot is short, at approximately 366 µs, compared to the 3.75 ms duration of the HV-3 frame, and the ACK packet is also short, at approximately 24 µs for 24 Mbps, in the event of a likely collision with the Bluetooth Rx slot, the ACK packet may be transmitted at a lower power level by utilizing the lowest available modulation rate.

Transmitting an ACK packet at a low modulation rate and corresponding low power may be utilized since the likelihood of collision with the transmission of another wireless station associated with the AP due to incorrect duration and/or network allocation vector (NAV) value is very small. Non-ACK transmissions originating from the collocated WLAN radio portion 504 need be scheduled during inter-SCO frame intervals based on, for example, the operations of the packet traffic scheduler 308 disclosed in FIG. 3. In this regard, Bluetooth activity prediction algorithms may be utilized to determine the appropriate timing of non-ACK packets during coexistence operation.

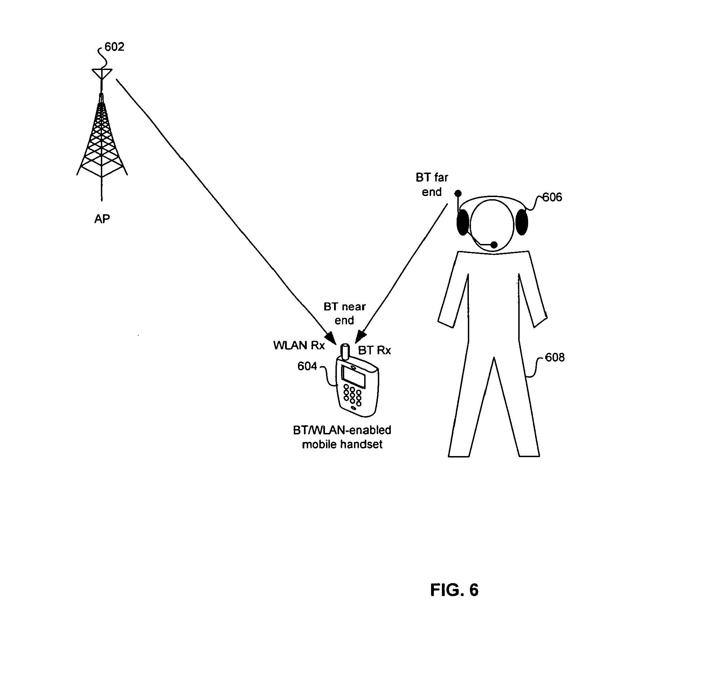

FIG. 6 is a diagram that illustrates an exemplary near end Rx/Rx mode of operation for wireless device comprising a radio chip that supports WLAN and Bluetooth radio operations, in accordance with an embodiment of the invention. Referring to FIG. 6, there is shown an access point (AP) 602, a BT/WLAN-enabled mobile handset 604, a user 608, and a Bluetooth-enabled wireless headset 606. In this exemplary mode of operation, the BT/WLAN-enabled mobile handset 604 may be receiving packets, such as VolP packets, for example, from the AP 602 and may also be receiving Bluetooth packets from the Bluetooth-enabled wireless headset 606. In this regard, the BT/WLAN-enabled mobile handset 604 may be operating in a WLAN receive (Rx) and Bluetooth receive (Rx) mode, or Rx/Rx mode. The near-end of the Bluetooth connection may correspond to the BT/WLAN-enabled mobile handset 604 while the far-end of the Bluetooth connection may correspond to the Bluetooth-enabled wireless headset 606. When the BT/WLAN-enabled mobile handset 604 is receiving Bluetooth packets and is not transmitting data or transmitting background noise, the Bluetooth connection may be said to be silent in the near-end and may be said to have speech in the far-end.

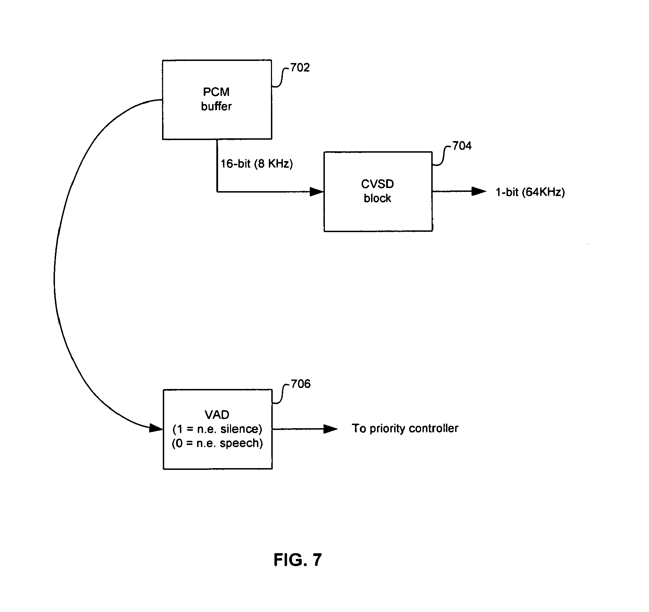

FIG. 7 is a block diagram illustrating an exemplary Bluetooth voice activity detection, in accordance with an embodiment of the invention. Referring to FIG. 7, there is shown a PCM buffer 702, a Continuous Variable Slope Delta (CVSD) block 704, and a voice activity detector (VAD) 706. The PCM buffer 702, the CVSD block 704, and/or the VAD 706 may be comprised within the Bluetooth radio portion 506 as disclosed in FIG. 5, for example.

The PCM buffer 702 may comprise suitable logic, circuitry, and/or code that may enable storage of PCM samples for Bluetooth voice data. The PCM buffer 702 may be utilized for storing, for example, 16-bit linear PCM samples at 8 KHz. The CVSD block 704 may comprise suitable logic, circuitry, and/or code that may be utilized to up-sample the output of the PCM buffer 702 and to filter the up-sampled data to generate, for example, 1-bit samples at 64 KHz.

The VAD 706 may comprise suitable logic, circuitry, and/or code that may enable detecting voice activity by utilizing at least a portion of the PCM samples stored in the PCM buffer 702. In this regard, the VAD 706 may, for example, assign a value of HIGH or '1' to an instance when there near-end silence is detected and LOW or '0' when there near-end speech is detected. The decisions of the VAD 706 may be correlated to the voice payload of, for example, SCO and/or eSCO packets because of the deterministic nature of the processing of linear samples into CVSD-encoded packet payload. The VAD 706 may determine near-end speech or silence based on background noise estimation, and/or level estimation. The VAD 706 may utilize parameters such as aggressiveness, hangover counter, and/or frame size in determining whether near-end speech or silence is detected. In this regard, the parameters utilized by the VAD 706 may be configurable. Hangover may refer to an amount of time or delay utilized to bridge short silence gaps and/or to ensure that an appropriate amount of time, generally 20ms, of silence is transmitted to ensure proper operation of the packet loss concealment algorithm in the far-end device, such as the Bluetooth-enable headset 606 disclosed in FIG. 6. The packet loss concealment algorithm may be utilized to insert comfort noise for lost packets by extrapolation of the last received packets, for example.

The VAD 706 may utilize the result of the detection operation to send at least one signal that may be utilized to control the priority level of Bluetooth transmission. For example, when near-end silence is detected, the HV-3 packet transmission priority level may be lowered and that may enable the wireless station to provide access to the WLAN radio for transmission of, for example, ACK packets.

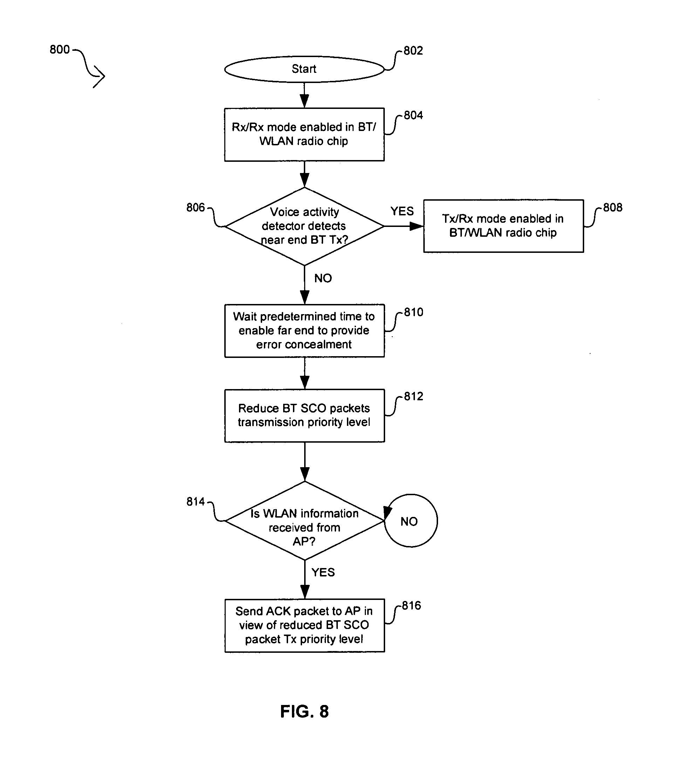

FIG. 8 is a flow diagram illustrating exemplary steps for shared antenna control using Bluetooth voice activity detection, in accordance with an embodiment of the invention. Referring to FIG. 8, there is shown a flow diagram 800. In step 804, after start step 802, a WLAN/Bluetooth radio, such as the WLAN/Bluetooth collaborative radio architecture 500 disclosed in FIG. 5, for example, may be enabled to operate in a RX/RX mode. In this regard, the WLAN/Bluetooth collaborative radio architecture 500 may utilize the shared LNA 520 to enable reception of Bluetooth and WLAN packets. In step 806, the VAD 706 may be utilized to detect whether near-end speech is occurring. When near-end speech occurs, that is, the Bluetooth radio portion 506 of the WLAN/Bluetooth collaborative radio architecture 500 is transmitting, the process may proceed to step 808. In step 808, a Bluetooth TX and WLAN RX mode of operation may be enabled and the Bluetooth transmission priority may be determined based on the collaborative' operation of the WLAN radio portion 504 and the Bluetooth radio portion 506.

Returning to step 806, when near-end silence or background noise occurs, that is, the Bluetooth radio portion 506 of the WLAN/Bluetooth collaborative radio architecture 500 is receiving, the process may proceed to step 810. In step 810, a hangover period or an amount of time or delay may be utilized to bridge short silence gaps and/or to ensure that an appropriate amount of time, generally 20ms, of silence is transmitted to ensure proper operation of the packet loss concealment algorithm in the far-end device, such as the Bluetooth-enable headset 606 disclosed in FIG. 6. The packet loss concealment algorithm may be utilized to insert comfort noise for lost packets by extrapolation of the last received packets, for example.

In step 812, the VAD 706 may be utilized to modify or update the Bluetooth transmission priority to a lower level since the Bluetooth radio portion 506 is not being currently utilized for transmission of Bluetooth packets. This approach may enable the WLAN radio portion 504 to have access to the single antenna 510 for transmission of packets when necessary. In step 814, the WLAN/Bluetooth collaborative radio architecture 500 may be enabled to receive at least one packet from an access point (AP) for communication to the WLAN radio portion 504. When AP packets are not received, the process may remain in step 814 and the WLAN/Bluetooth collaborative radio architecture 500 may remain enabled to receive AP packets. When AP are received, the WLAN radio portion 504 may transmit an acknowledgment (ACK) packet to the AP based on the reduced Bluetooth transmission priority level that resulted from the detection of near-end silence by the VAD 706.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for handling wireless signals, the method comprising:
detecting voice activity in at least one of a first wireless protocol channel and a second wireless protocol channel in a radio chip within a wireless device that handles communication for said first wireless protocol channel and said second wireless protocol channel via a single antenna; and
adjusting a transmission queue in said radio chip based on said detected voice activity.

2. The method according to claim 1, wherein said first wireless protocol channel is a Bluetooth (BT) channel.

3. The method according to claim 1, wherein said second wireless protocol channel is a Wireless Local Area Network (WLAN) channel.

4. The method according to claim 1, comprising adjusting said transmission queue when at least one of said first wireless protocol channel and said second wireless protocol channel is not transmitting voice information.

5. The method according to claim 1, comprising generating at least one signal that adjusts said transmission queue.

6. A machine-readable storage having stored thereon, a computer program having at least one code section for handling wireless signals, the at least one code section being executable by a machine for causing the machine to perform steps comprising:
detecting voice activity in at least one of a first wireless protocol channel and a second wireless protocol channel in a radio chip within a wireless device that handles communication for said first wireless protocol channel and said second wireless protocol channel via a single antenna; and
adjusting a transmission queue in said radio chip based on said detected voice activity.

7. A system for handling wireless signals, the system comprising:
one or more circuits that enable detecting voice activity in at least one of a first wireless protocol channel and a second wireless protocol channel in a radio chip within a wireless device that handles communication for said first wireless protocol channel and said second wireless protocol channel via a single antenna; and
said one or more circuits enable adjustment of a transmission queue in said radio chip based on said detected voice activity.

8. The system according to claim 7, wherein said first wireless protocol channel is a Bluetooth (BT) channel.

9. The system according to claim 7, wherein said second wireless protocol channel is a Wireless Local Area Network (WLAN) channel.

10. The system according to claim 7, wherein said one or more circuits enable adjustment of said transmission queue when at least one of said first wireless protocol channel and said second wireless protocol channel is not transmitting voice information.
